# EUROPEAN PATENT APPLICATION

(11) **EP 3 945 067 A1**
(43) Date of publication of application: **02.02.2022**
(21) Application number: 20382672.2
(22) Date of filing: 27.07.2020
(51) Int. Cl.: C01B 21/082

(54) **A METHOD FOR PRODUCING AN S-TRIAZINE OR S-HEPTAZINE-BASED POLYMERIC OR OLIGOMERIC MATERIALS AND S-TRIAZINE OR S-HEPTAZINE-BASED COATINGS AND COMPOSITES DERIVED THEREFROM**

(71) Applicant: Universitat Rovira I Virgili, 43003 Tarragona (ES)
(72) Inventor: DUBOV, Oleg, 43003 Tarragona (ES); FONT CAPAFONS, José, 43003 Tarragona (ES); FABREGAT LLANGOSTERA, Azael, 43003 Tarragona (ES); GIRALT MARCÉ, Jaume, 43003 Tarragona (ES); STÜBER, Frank Erich, 43003 Tarragona (ES); TORRENS SERRAHIMA, Esther, 43003 Tarragona (ES)
(74) Representative: Segui Quetglas, Margalida

(57) **Abstract**

A method for producing s-triazine or s-heptazine-based or carbon nitride-based coating or s-triazine or s-heptazine-based polymeric or oligomeric material and composite materials containing this material are proposed. The method comprises condensing a compound containing amino or imino groups with a halide-containing heterocyclic compound in one or more solvents; or self-condensation of a heterocyclic compound containing both halide and amino or imino groups in one or more solvents, allowing to obtain a polyazine precursor solution that includes polymeric or oligomeric materials containing at least one of the following chemical moieties: 1,2,4,5-tertrazine, s-triazine, tri-s-triazine,1H-tetrazole; and filtering and/or evaporating one or more solvents in vacuum or gas atmosphere to yield a dried film. A polyazine-based composite material or carbon nitride coating obtainable by said method is also proposed. A method for posterior engraving such coatings by laser or electron beam radiation is also disclosed.

## Description

### TECHNICAL FIELD

The present invention is directed to a method for producing s-triazine or s-heptazine-based polymeric or oligomeric precursor materials (further referred to as polyazine precursors) for s-triazine or s-heptazine-based or carbon nitride-based coatings and composite materials, including composite coatings and membranes. The invention also relates to s-triazine or s-heptazine-based or carbon nitride-based coating or composite obtainable by said method. The proposed s-triazine or s-heptazine-based or carbon nitride-based coatings or composites are obtained from soluble polyazine precursors and typically have high (above 30%) nitrogen content in the polyazine-based binder phase of coating or composite.

### BACKGROUND OF THE INVENTION

Nitrides of carbon represent a family of materials, which includes two layered analogues of graphite with layers consisted by sheets of (poly(tri-s-triazine imide) and 1,3,5-triazine imide, respectively) ([1], [2]), as well as different products of incomplete condensation with pending amino groups [2] and, more recently, linear triazine and heptazine imides [3].

Carbon nitrides have become a hotspot in the materials science in the recent years due to a wealth of attractive properties they possess. Both heptazine-based and 1,3,5-triazine-based structures exhibit fascinating thermal endurance, superior stability against oxidation and hydrolysis, biocompatibility and semiconducting properties with moderate and easily tunable bandgaps, corresponding to excitation with near UV or even blue-violet light, which makes them undoubtedly interesting for thin film electronics, photoelectronics and photocatalysis [1].

In the present invention, the carbon nitride-based materials are produced in a manner very similar to that usually employed for fabrication of the so called glassy, or turbostratic carbon - by thermal transformation of crosslinked polymeric resins.

The synthesis of new, very nitrogen-rich poly- or oligomeric precursors allowed to apply this well-known process to the fabrication of carbon nitride coatings.

The glassy carbon structure is believed to inherit structural motifs of packed crosslinked polymer chains, giving birth for folded nano-ribbons or interconnected nanotubes, constituting the network of the carbonaceous material. According to our findings, annealed carbon nitride films have a similar turbostratic structure.

The polymeric resins employed as precursors for glassy carbons typically have very significant hydrogen content and are structurally very far from the final product of pyrolysis consisting of conjugated graphene rings. In contrast, the majority of polymers employed as precursors for carbon nitride materials in the current invention, especially the ones based on heterocyclic diamines, are extremely nitrogen-rich and have very close similarity in their structure to the annealed carbon nitride materials.

For this reason, it is very difficult to draw a clear distinction between annealed (i.e. carbon nitride-based) and non-annealed polyazinic materials. Annealing can be characterized as auxiliary procedure typically required for fabrication of a denser, crosslinked and more chemically stable material.

However, even room-temperature drying of solvent often results in some degree of precursor crosslinking, giving relatively stable films.

It also worth mentioning that in case of producing composite polyazine-based materials with two-dimensional particles (i.e. graphene) implemented as fillers, additional π -π interactions between the s-triazine and, especially, tri-s-heptazine rings play an important role in mechanical properties of the resulting material and particles aligning in the composite. For such composites, the annealing step very often is not required.

Glassy carbon coatings, typically on graphitic substrates, are well-known in the prior art.

For instance, the US patent 5,476,679 describes a method for producing vitreous carbon coatings on graphite crucibles by means of dip-coating the crucible with a liquid non-graphitizing thermosetting resin followed by heating the component to the temperature sufficient to thermoset the resin layer and further heating in an inert or halogen-containing atmosphere with the air to carbonize the crosslinked layer of the resin.

The use of glassy carbon coatings impregnated with catalytic metal nanoparticles in an electrochemical cell is disclosed in the US patent 5,453,169. Easily crosslinkable acetylenic oligomers are complexed with transition metals and the resulting coatings are carbonized in order to obtain metal nanoparticles distributed in the matrix of glassy carbon. The support materials in said patent include carbon felt, carbon fiber, silica or metal substrates.

No methods for producing carbon nitride or polyazine-based materials relying mainly on solution processing techniques have been found in the scientific and patent publications. On the other hand, nitrides of carbon with crystallic or amorphous triazinic or heptazinic structure are well known as well as methods for manufacturing carbon nitride films and coatings. Most of these methods, however, rely on complex and/or expensive techniques based on vacuum sputtering, chemical vapor deposition or including the production of carbon nitride nanoparticles/sheets that are later used for fabrication of a coating or a composite.

Quite often these coatings are produced by means of mixing carbon nitride or N-graphene nanoparticles or sheets with some adhesive binder, thus providing a composite matrix. A good example of this approach is given in the US application 20190180949 A1, where such adhesive-based coating is proposed for the fabrication of supercapacitors.

However, for the purposes of catalysis and electrocatalysis, the stability of the coating in chemically aggressive, especially oxidative, environment is an issue. Adhesive-based approaches require the use of adhesives which would have the chemical stability comparable with the stability of carbon nitride itself, which is difficult to achieve. In addition, fabrication of carbon nitride or N-graphene nanoparticles/sheets is a complex and energy inefficient process.

Other common group of methods used for depositing carbon nitride films is based on gaseous starting materials as sources of nitrogen and carbon. The majority of the proposed processes of this kind belong to the group of plasma-driven chemical vapor deposition (CVD) techniques.

A typical example of a CVD-based approach is given in the US patent 8,741,396, where carbon monoxide and nitrogen gases are used as carbon and nitrogen sources, respectively, to form amorphous carbon nitride film.

Another modification of the same approach implies the use of solid precursor for carbon and, presumably, some nitrogen needed to form carbon nitride material. The rest of the stoichiometric nitrogen amount is provided by nitrogen-rich plasma. In particular, US patent 9,735,427 describes a method for manufacturing triazine-based carbon nitride films on metallic substrates by means of microwave heating of low pressure nitrogen plasma-submerged substrate, the substrate being previously coated with silk fibroin.

Another method for obtaining carbon nitride or nitrogen-reach carbon coatings is described in the Chinese patent CN104201397. In said patent, a nitrogen-containing conductive polymer comprising preferably polypyrrole, polyaniline, polydopamine, polyacrylonitrile or polyacrylamide as well as a catalyst precursor are deposited or grown on a paper sheet as a substrate to obtain a catalyst precursor / nitrogen-containing conductive polymer composite paper sheet. The impregnated paper is then immersed in alkali-containing solution of nitrogen-containing (preferably low molecular weight) organic substance and finally placed in a protective atmosphere, and carbonized and nitridized at 700 to 1000 ºC to obtain a three-dimensional carbon fiber network composed by metal nitride / nitrogen-containing hierarchical carbon composite electrode with a self-supporting structure. The content of nitrogen in the carbon nitride composite is claimed to be in the range from 15 to 26% by weight.

In contrast with the present invention, CN104201397 allows obtaining carbon nitride films with relatively low nitrogen content and exclusively on carbon substrate (the carbon porous substrate is obtained from the paper support during the carbonization). The necessity to use low molecular weight nitrogen precursors, e.g. urea, melamine, diethylamine, aniline, dicyandiamide, and formamide is, most probably, substantiated by the implementation of precursor polymers with nitrogen content, not sufficient for carbon nitride synthesis.

Nevertheless, the process disclosed in said Chinese patent is unique in the prior art because it describes the deposition of carbon nitride films derived from polymer precursors and loaded with catalytic dopants. On the contrary, the method of present invention utilizes a sole polymer with ultra-high nitrogen content as a precursor for polyazine-based (in case if precursor polyazine material is not annealed) or carbon nitride-based (in case of annealing) film which eliminates the need for low molecular weight nitrogen sources and greatly simplifies the coating process. The same feature allows the use of virtually any substrates, including non-porous or unstable in alkalinic solutions, e.g. aluminum.

The main benefit of the proposed method in comparison with the analogue publication is, yet, the extremely low temperature of annealing which is required for obtaining stable carbon nitride-based coatings. Moreover, in case if the full transformation of polyazine precursor material to carbon nitride film is not prerequisite, the application of film or synthesis of composite material can even be achieved at ambient or slightly elevated temperature. In the Chinese invention the optimum carbonization temperature is claimed to be in the 700 to 1000 ºC range, in most typical glassy carbon coatings the temperature is required to exceed 1000 ºC. In contrast, in the present invention the temperature range used for obtaining stable coatings, is 0 to 600ºC, which greatly simplifies the process and, more importantly, allows to use catalytic dopants sensitive to heating.

Although the precursor materials claimed in the present invention are reported for the first time and therefore have not been known in the current level of technology, the synthesis of precursor materials is a one-step process relying on cheap and available source materials. The solvent and the hydrogen ions scavenger, typically used in the process, can be recovered from the following drying and crosslinking step with almost quantitive efficiency. In some cases sodium or potassium carbonates can be used as acid scavengers and volatile solvents as reaction media, which eliminates the need for any recovery of the scavenger and greatly simplifies the recuperation of the solvent.

The synthesis of carbon nitride-based coatings is accomplished by means of simple controlled heating of the coated article without any need for complex control and automation. Very often, heating in air is acceptable.

Synthesis of composite not-annealed materials based on polyazine polymers or oligomers typically includes mixing of micro- or nanoparticles with polyazine precursor in organic solvent or even water and drying of the said article in vacuum or gas atmosphere or, in some cases, filtering off the solvent followed by drying.

### References:

[1] Dong, G., Zhang, Y., Pan, Q. & Qiu, J. A Fantastic Graphitic Carbon Nitride (g-C3N4) Material: Electronic Structure, Photocatalytic and Photoelectronic Properties. Journal of Photochemistry and Photobiology C: Photochemistry Reviews 20, (2014).
[2] Schwarzer, A., Saplinova, T. & Kroke, E. Tri-s-triazines (s-heptazines)-From a "mystery molecule" to industrially relevant carbon nitride materials. Coordination Chemistry Reviews 257, 2032-2062 (2013).
[3] Algara-Siller, G., Severin, N., Chong, S.Y., Björkman, T., Palgrave, R.G., Laybourn, A., Antonietti, M., Khimyak, Y.Z., Krasheninnikov, A.V., Rabe, J.P., Kaiser, U., Cooper, A.I., Thomas, A., Bojdys, M.J., 2014. Triazine-Based Graphitic Carbon Nitride: a Two-Dimensional Semiconductor. Angewandte Chemie International Edition 53, 7450-7455.

### DESCRIPTION OF THE INVENTION

The object of the present invention is thus to provide a method for producing polyazine-based composite materials and coatings or carbon nitride-based coatings. This object is fulfilled by a method with the features of claim 1 and by a coating/composite material with the features of claim 12.

According to one aspect a method for producing a polyazine/carbon nitride-based coating or composite material is provided. The method comprises condensation of a compound containing amino or imino groups with a halide-containing heterocyclic compound in one or more solvents; or self-condensation of a heterocyclic compound containing both halide and amino or imino groups in one or more solvents, to obtain a polyazine precursor solution comprising polymeric or oligomeric materials, for example amides or imides or salts of said amides or imides, containing at least one of the following chemical moieties: 1,2,4,5-tetrazine, s-triazine, tri-s-triazine,1H-tetrazole; optionally mixing the obtained polyazine precursor solution with corresponding filling or doping material and, in some cases, additional solvents; and by filtering out and/or evaporating one or more solvents in vacuum or gas atmosphere to yield a dried film, this being a dried coating or composite material. In cases when annealed carbon nitride coating is required, it is obtained by further heating of the dried (polyazine-based) film in vacuum or gas atmosphere.

In an embodiment, the polymeric or oligomeric materials comprise amides or imides or salts of said amides or imides.

In an embodiment, the polymeric or oligomeric materials are doped during the process of their synthesis or afterwards with doping material represented by compounds of boron, carbon, phosphorus or antimony, among others.

In an embodiment, the polymeric or oligomeric materials are doped during the process of their synthesis or afterwards with doping material represented by organic or inorganic acids, bases or salts thereof.

In an embodiment, the method also comprises adding doping material represented by micro- or nano- inert templating particles to the polyazine precursor solution and further leaching the particles from the obtained carbon nitride coating in order to obtain a coating having controlled porosity.

In an embodiment, the method also comprises doping the polymeric or oligomeric materials during the process of their synthesis or afterwards with doping material represented by soluble compounds of transition metals or by micro- or nano-particles containing transition metals in order to render the carbon nitride coating with catalytic or electrocatalytic properties.

In yet another embodiment, the polymeric or oligomeric materials are doped during the process of their synthesis or mixed afterwards with soluble compounds, micro- or nanoparticles in order to make a composite material or coating with polyazine binder or modify the mechanical, electrical or optical characteristics of the polyazine/carbon nitride coating.

The filtration and/or evaporation step in vacuum or gas atmosphere can be performed in a temperature range from 0°C to 200°C. Typically, the filtration step is required when relatively thick composite materials (for instance, composite membranes) are produced on porous support. In the case of thin coating application and/or non-porous supports the solvent can be evaporated directly. Likewise, the dried film can be heated up to a temperature above 200ºC. The heating step is auxiliary and is used to partially decompose and/or crosslink the precursor in order to produce a material with dense turbostratic structure composed mainly by carbon and nitrogen and further referred to as carbon nitride material. In some particular applications, the coating or composite material containing the polyazine precursor, can be used without a heat treatment.

According to another aspect, a carbon nitride-based coating obtained by the method of the first aspect is also provided.

In an embodiment, the carbon nitride-based coating has high (above 30%) nitrogen content. In some embodiment the carbon nitride-based coating also has a partially ordered structure.

The carbon nitride-based coating of present invention features many physical and structural properties, such as nanocristallinity according to X-ray diffraction patterns, low density, high chemical and electrochemical stability and impermeability to gases, with so called glassy or vitreous carbons (more precisely called turbostratic carbon materials).

The latter represent a class of carbonaceous materials composed mainly by carbon, widely used in different industries, especially as electrochemically stable electrode materials, production of crucibles for high purity materials processing and, more recently, fabrication of MEMS devices.

Composite materials obtained by combining the polyazine precursor with corresponding micro- or nanoparticles, especially graphene, carbon nanopowder and carbon nanofibers, typically demonstrate densely packed layered structure with high electrical conductivity combined with excellent wettability by polar solvents, which makes them undoubtedly interesting for water filtration, electrochemical applications, sensors, and thin film electronics.

Annealing of polyazine precursors results in gradual diminution of their mass and shrinkage of the material volume. Although the specific curves of mass and volume contraction with temperature depend on exact type of precursor material and annealing conditions, typically most of materials fully decompose after 600-700°C, leaving no traces in both air atmosphere and vacuum.

This effect can be successfully used for posterior treatment of coatings and composite materials after filtering off and/or evaporation of the solvent in order to cut the coating or composite material or render it with patterns or pores.

Such patterns or pores in the semiconducting or conducting material can be used for fabrication of MEMS devices, sensors or printable electronics.

In yet another embodiment, laser radiation or electron beam in scanning mode or applied through a mask is used in order to create a geometric pattern of heating on the deposited polyazine coating or carbon nitride coating resulting in controlled etching of coating, allowing to create patterns on the surface of the coating.

### DETAILED DESCRIPTION OF PREFERRED EMBODIMENTS

Embodiments of the present invention present a method for producing a polyazine/carbon nitride-based coating or composite material by condensation of a compound containing amino or imino groups with a halide-containing heterocyclic compound in one or more solvents; or self-condensation of a heterocyclic compound containing both halide and amino or imino groups in one or more solvents, to obtain a polyazine precursor solution comprising polymeric or oligomeric materials, for example amides or imides or salts of said amides or imides, containing at least one of the following chemical moieties: 1,2,4,5-tetrazine, s-triazine, tri-s-triazine,1H-tetrazole; by evaporating and/or filtering out one or more solvents in vacuum or gas atmosphere, in particular in the temperature range from 0°C to 200ºC, to yield a dried film; and, if required, by additional heating (in the temperature range from 200ºC to 600ºC) of said dried film in vacuum or gas atmosphere.

The precursor polymers/oligomers (polyazine polymers/oligomers) can be synthesized by means of reacting heterocyclic compounds, containing at least two amino- or imino-group in their cycle or directly attached to their cycle, with cyanuric chloride (2,4,6-trichloro-s-triazine) or cyamelluric chloride (2,5,8-trichloro-tri-s-triazine) or their corresponding fluorine or bromine analogues, diamine to acid halogenide ratio being in the range from 0.8/1 to 1.2/1 and preferably being 1/1; or by means of reacting compounds with aliphatic main chain, containing at least two amino- or imino- groups, with cyamelluric chloride or its fluorine or bromine analogue, diamine to acid halogenide ratio being in the range from 0.8/1 to 1.2/1 and preferably beeing 1/1; or self-condensation of nitrogen-rich heterocyclic compounds, containing s-triazine or 3-s-triazine chemical moieties in their structure and containing at least one amino- or imino-group in their cycle or directly attached to their cycle and at least one halogen substituent directly attached to their cycle. In all cases, the condensation takes place in a solvent and in the presence of hydrogen ions scavenger, preferably triethylamine, N,N-diisopropylethylamine or an alkali metals carbonate. In some embodiments, the coating can have controlled porosity by further adding micro- or nano-inert particles to the polyazine precursor solution and by further leaching the particles from the pyrolyzed carbon nitride coating.

In some embodiments, the coating or composite material can have catalytic or electrocatalytic properties by their doping during the synthesis of the polymeric or oligomeric precursors or post-synthetic doping with soluble compounds of transition metals or with micro- or nano-particles containing transition metals.

In some embodiments, the coating or composite material can have modifiable mechanical, electrical or light absorption characteristics by further doping the polymeric or oligomeric azine materials with micro- or nano particles in the solvent, used for the synthesis of the precursor, another solvent or their mixture. In the case of composite materials, said particles would typically constitute the main mass of the material with azine polymeric or oligomeric materials acting as composite binder. In the case of coatings, said particles can be the main constituent of the coating or a dopant, depending on a particular case.

The proposed method enables to obtain conductive and semiconductive polyazine/carbon nitride-based coatings and composite materials, which can be impregnated with metal complexes or nanoparticles, among others, at very low pyrolysis temperatures or without pyrolysis step, which can potentially be used in a vast number of applications: filtration of water and other polar liquids, catalysis, including photocatalysis with UV and visible light illumination and electrocatalysis, hydrogen evolution reaction, solar cells, thin film electronics, MEMS devices fabrication and others.

In some embodiments, the polyazine coating or composite material after filtering off and/or drying of the solvent can be heated in vacuum or gas atmosphere in the temperature range from 200 to 600°C in order to obtain materials mainly composed of carbon and nitrogen (carbon nitride-based materials).

In some embodiments, the polyazine coating or composite material or carbon-nitride material can be heated by means of scanning laser beam or electron beam or by means of masking laser or electron radiation in order to ablate the material in a controlled way giving patterns on the coating layer.

Following some particular examples of the method for producing the polyazine precursors, polyazine-based coatings and carbon nitride coating are detailed.

### • Synthesis of poly [azanediyl (2-chloro-1,3,5-triazine-4,6-diyl)], further abbreviated as poly(CYA-CI-NH), 5wt.% solution in DMAc

8 mmol (1.32 g) of 2-amino-4,6-dichloro-1,3,5-triazine and 24mmol (3.10 g) of N,N-diisopropylethylamine (DIPEA) were dissolved in 16.14 g of DMAc (N,N-dimethylacetamide). The vial was purged with Ar and sealed. The solution was refluxed at room temperature for 20 min, then heated to 110°C and left under reflux at this temperature for 72 hours.

### • Synthesis of poly [(2-chloro-1,3,5-triazine-4,6-diyl (5-iminotetrazol-2-yl)], further abbreviated as poly(CYA-CI-AMTAZ), 5wt.% solution in DMAc

8 mmol (0.681g) of 5-aminotetrazole and 24mmol (3.1 g) of N,N-diisopropylethylamine (DIPEA) were dissolved in 20g of DMAc. The solution was cooled down to -5°C. In continuous Ar flow, a solution of 8 mmol of cyanuric chloride (1.475 g) in 6.96 g DMAc was added to the mixture dropwise while keeping the temperature in the -5°C to -0°C range and intensive stirring.

After finishing the addition, the solution was refluxed at room temperature for 20 min, then sealed, heated to 70°C and left under reflux at this temperature for 24 hours.

### • Synthesis of poly [(2-hydroxy-tri-s-triazine-5,8-diyl (1,2-diiminoethane)], further abbreviated as poly(CYAMEL-OH-EDA), 2wt.% solution in water

8 mmol (2.212g) of 2,5,8-trichloro-tri-s-triazine (cyamelluric chloride) were dissolved in 50g of dry 1,4-dioxane. 48mmol (5 g) of sodium carbonate were suspended in the solution. The solution was cooled down to -25°C. In continuous Ar flow, a solution of 8 mmol of 1,2-diaminoethane monohydrochloride (0.772 g) in 10 g 1,4-dioxane was added to the mixture dropwise while keeping the temperature in the - 25°C to -15°C range and intensive stirring.

After finishing the addition, the solution was refluxed at room temperature for 3 hours, then mixed with 100g of water and dialyzed in running water for 48 hours using 14 KDa cellulose membranes. The resulting solution contained the pure polymer with approximately 2% wt.concentration.

### • Synthesis of poly [(2-hydroxy-tri-s-triazine-5,8-diyl (5-iminotetrazol-2-yl)], further abbreviated as poly(CYAMEL-OH-AMTAZ), 2wt.% solution in water

8 mmol (2.212g) of 2,5,8-trichloro-tri-s-triazine (cyamelluric chloride) were dissolved in 30g of dry DMAc. 24mmol (2.5 g) of sodium carbonate were suspended in the solution. The solution was cooled down to -25°C. In continuous Ar flow, a solution of 8 mmol (0.681g) of 5-aminotetrazole in 10 g DMAc was added to the mixture dropwise while keeping the temperature in the -25°C to -15°C range and intensive stirring.

After finishing the addition, the solution was refluxed at room temperature for 3 hours, then mixed with 100g of water and dialyzed in running water for 48 hours using 14 KDa cellulose membranes. The resulting solution contained the pure polymer with approximately 2% wt.concentration.

### • Preparation of carbon nitride film on a flat support

Aluminum foil disc (47mm in diameter) was spin-coated with a precursor polymer solution in DMAc with rotation speed ramping from 500 to 3000 rpm, ramp time 2 minutes. The coated disc was dried in 0.3 Torr vacuum at 200°C for 1hour, and then annealed at 400°C for 1h in air. A film with 60 micron average thickness was obtained when using poly(CYA-CI-NH) 5%wt as precursor, 40 micron when using poly(CYA-CI-AMTAZ).

According to this procedure, a film can be deposited on virtually any flat solid support.

### • Laser engraving the deposited carbon nitride film for creating patterns

Aluminum foil disc (47mm in diameter) coated with carbon nitride using poly(CYA-CI-NH) 5%wt as precursor and annealed at 400°C for 1h in air, has been engraved by 400-410 nm Nichia Corporation diode laser (NDV4B16, optical power 300mW) beam focused to round 50mkm diameter spot, scanning speed 200 mm/min. Full disintegration of the carbon nitride film under the beam has been achieved with almost no effect on supporting aluminum surface. The pattern obtained by laser etching had sharp edges.

### • Preparation of carbon nitride film on carbon felt, carbon paper, carbon cloth or other non-flat material

A piece of carbon-based support material was dipped in a diluted precursor polymer solution (0.01-2% wt., dilution with DMAc), taken out and dried in 0.3 Torr vacuum at 200°C for 1hour, then annealed at 400°C for 1h in air.

According to this procedure, a film can be deposited on virtually any fibrous, felt-like or porous solid support.

### • Preparation of porous carbon nitride film on a solid support

0.5% wt. precursor polymer solution was mixed with nanopowder of tin oxide, 20 micron average particle size so that the concentration of tin oxide in the final preparation would be 0.25%.

The tin oxide-loaded polyazine precursor solution was used for preparation of films on flat or fibrous supports, in accordance with the corresponding basic procedures.

After annealing, the resulting coated material was submersed in 1% wt. solution of ammonium hydrofluoride (NH₄HF₂) for 2 hours at room temperature. Other leaching solutions can also be used, including hydrogen fluoride, alkalis and special formulations, with corresponding altering of leaching conditions.

### • Preparation of conductive carbon nitride film bv doping with conductive particles

The precursor polymer solution was mixed with Vulcan VX-72 so that the ratio of carbon mass to the mass of dry polymer would be 0.3 (30%). The doped solution was used for film preparation according to a standard procedure to give a coating with conductivity exceeding 2*10⁴ S/m at room temperature and increased surface area.

### • Preparation of conductive carbon nitride film by doping with phosphorus

A precursor polymer solution was mixed with ammonium hehafluorophosphate (NH₄PF₆) so that the ratio of elemental phosphorus mass to the mass of dry polymer would be 0.01 (1%). The doped solution was used for film preparation according to a standard procedure to give a coating with conductivity exceeding 4*10⁵ S/m at room temperature.

### • Preparation of conductive carbon nitride film by doping with carbon (post-doping)

The precursor polymer solution (CYA-CI-AMTAZ or CYA-CI-NH) was mixed with 2,6-diaminopyridine or 2,4-diaminopyrimidine so that the ratio of the dopant to the mass of dry polymer would be 0.01 or 0.03, respectively. The doped solution was used for film preparation according to a standard procedure.

### • Preparation of conductive carbon nitride film by doping with carbon (doping during synthesis)

7.92 mmol (1.31 g) of 2-amino-4,6-dichloro-1,3,5-triazine, 0.08 mmol of 2,6-dyaminopyridine (8.73 mg) and 24mmol (3.10 g) of N,N-diisopropylethylamine (DIPEA) were dissolved in 16.14 g of DMAc (N,N-dimethylacetamide). The vial was purged with Ar and sealed. The solution was refluxed at room temperature for 20 min, then heated to 110°C and left under reflux at this temperature for 72 hours.

The doped solution was used for film preparation according to a standard procedure.

Both post-doped and doped during synthesis films on aluminum support demonstrate high conductivity exceeding 7*10⁵ S/m at room temperature, high cathode photocurrents (exceeding for some samples 2 mA/cm² under one standard sun illumination, pH 5.0, applied potential -0.30 V relative to SHE).

### • Preparation of catalytically active carbon nitride coatings by means of doping with transition metals salts

A precursor polymer solution was mixed with anhydrous copper (II) chloride so that the ratio of elemental copper mass to the mass of dry polymer would be 0.005 (0.5%). The doped solution was used for film preparation according to a standard procedure to give a coating with high activity as heterogeneous Fenton-like catalysts.

### • Preparation of catalytically active carbon nitride coatings by means of doping with transition metal complexes

A precursor polymer solution was mixed with iron (II) phthalocyanine so that the ratio of iron complex mass to the mass of dry polymer would be 0.003 (0.3%). The doped solution was used for film preparation according to a standard procedure to give a coating with high electrochemical activity as oxygen reduction reaction catalyst.

### • Preparation of Fenton-like active catalytic coating from iron phthalocyanine-doped CYA-CI-AMTAZ (doping during synthesis).

8 mmol (0.681g) of 5-aminotetrazole and 24mmol (3.1 g) of N,N-diisopropylethylamine (DIPEA) were dissolved in 20g of DMAc. To the solution, 0.1 mmol of iron (II) octacarboxyphthalocyanine tetraanhydride (8.5 mg) was added.

The solution was then stirred at room temperature for 4 hours, then cooled down to -5°C. In continuous Ar flow, a solution of 7.6 mmol of cyanuric chloride (1.401 g) in 6.96 g DMAc was added to the mixture dropwise while keeping the temperature in the -5°C to -0°C range and intensive stirring.

After finishing the addition, the deep-green solution was refluxed at room temperature for 20 min, then sealed, heated to 70°C and left under reflux at this temperature for 24 hours.

The doped solution was used for film preparation according to a standard procedure to give a coating with high activity as heterogeneous Fenton-like catalysts.

### • Preparation of composite graphene membrane with heptazine-based polymeric binder

1g of exfoliated graphene powder (Sigma Aldrich) has been suspended in 20 g water with subsequent addition of 5 g of 2wt.% CYAMEL-OH-EDA solution. The resulting suspension has been sonicated for 1h and then filtered on 0.45 mkm cellulose membrane. The resulting graphene composite membrane after drying in air at 100°C demonstrated high conductivity exceeding 3*10⁷ S/m at room temperature and excellent hydrophilicity (contact angles below 40 degrees).

### • Preparation of composite carbon nanofiber membrane with heptazine-based polymeric binder

1 g of pyrolitically striped carbon platelets, 100nmx20-200 mkm (Sigma Aldrich) has been suspended in 20 g water with subsequent addition of 5 g of 2wt.% CYAMEL-OH-EDA solution. The resulting suspension has been sonicated for 1h and then filtered on 0.45 mkm cellulose membrane. The resulting graphene composite after drying in air at 100°C demonstrated high conductivity exceeding 8*10⁵ S/m at room temperature and excellent hydrophilicity (contact angles below 40 degrees).

### • Preparation of composite graphene membrane with carbon nitride binder

1 g of exfoliated graphene powder (Sigma Aldrich) has been suspended in 20 g water with subsequent addition of 5 g of 2wt.% CYAMEL-OH-AMTAZ solution. The resulting suspension has been sonicated for 1h and then filtered on 0.45 mkm cellulose membrane. The resulting graphene composite membrane was dried in air at 100°C and then heated in continuous N₂ flow at 200-300-400-500°C (1 hour at each temperature). The resulting composite membrane demonstrated high conductivity exceeding 5*10⁷ S/m at room temperature and excellent hydrophilicity (contact angles below 40 degrees) together with outstanding electrochemical stability in both anode and cathode polarizations.

Although in this document the embodiments of the present invention have been described with reference to various specific features, it will be obvious for a skilled person to carry out the invention with modifications. All of these modifications are considered to be within the scope of the claims. Likewise, the claims are intended to cover all the generic and specific characteristics of the described exemplary embodiments and all the statements of the scope of protection which, by language reasons, may be said to be therewithin.

The scope of the present invention is defined in the following set of claims.

## Claims

1. A method for producing an s-triazine or s-heptazine or carbon nitride-based coating or composite material, comprising:
- condensation of a compound containing amino or imino groups with a halide-containing heterocyclic compound in one or more solvents or self-condensation of a heterocyclic compound containing both halide and amino or imino groups in one or more solvents in order to obtain a polyazine precursor solution comprising polymeric or oligomeric materials containing at least one of the following chemical moieties: 1,2,4,5-tetrazine, s-triazine, tri-s-triazine or 1H-tetrazole; and
- filtering and/or evaporating the one or more solvents in the polyazine precursor solution in vacuum or gas atmosphere to yield a dried film.

2. The method of claim 1, wherein the polymeric or oligomeric materials comprise amides or imides or salts of said amides or imides.

3. The method of any of previous claims, further comprising doping the polymeric or oligomeric materials with a compound including boron, carbon, phosphorus or antimony.

4. The method of any one of the previous claims, further comprising doping the polymeric or oligomeric materials with organic or inorganic acids, bases or salts thereof.

5. The method of any one of the previous claims, further comprising adding micro- or nano- inert templating particles to the polyazine precursor solution and further leaching the particles from the obtained carbon nitride-based coating in order the coating having controlled porosity.

6. The method of claim 5, further comprising adding conductive particles to the polyazine precursor solution.

7. The method of any one of the previous claims, further comprising doping the polymeric or oligomeric materials during their synthesis or afterwards with soluble compounds of transition metals or by micro- or nano-particles containing transition metals in order to render the carbon nitride coating with catalytic or electrocatalytic properties.

8. The method of any one of the previous claims, further comprising mixing the polyazine precursor solution with soluble compounds, micro- or nanoparticles.

9. The method of claim 1, wherein the filtration and/or evaporating step in vacuum or gas atmosphere is performed in a temperature range from 0ºC to 200ºC.

10. The method of any one of claims 1 to 9, further comprising heating the dried film up to a temperature above 200ºC to yield an annealed film.

11. The method of claim 10, wherein the dried film or annealed film is engraved by laser or electron beam in order to modify thickness or create patterns.

12. The method of any one of claims 1 to 11, further comprising mixing the polyazine precursor solution with additional solvents and filling particles before the filtering and/or evaporation step.

13. An s-triazine or s-heptazine or carbon nitride-based coating or composite material obtained by the method according to any one of claims 1 to 12.

14. The s-triazine or s-heptazine-based or carbon nitride-based coating of claim 13, comprising a nitrogen content above 30%.
